# EUROPÄISCHE PATENTSCHRIFT

(11) **EP 0 984 185 B1**
(45) Veröffentlichungstag und Bekanntmachung des Hinweises auf die Patenterteilung: **11.01.2006**
(21) Anmeldenummer: 99117172.9
(22) Anmeldetag: 01.09.1999
(51) Int. Cl.: F16D 25/08

(54) **Hydraulische Stellvorrichtung zur Betätigung einer Kupplung, insbesondere für Kraftfahrzeuge**
Hydraulic actuating device for operating an automotive clutch
Dispositif d'actionnement hydraulique pour l'opération d'un embrayage de véhicule automobile

(30) Priorität: 02.09.1998 DE 19839921
(43) Veröffentlichungstag der Anmeldung: 08.03.2000
(73) Patentinhaber: FTE automotive GmbH, 96106 Ebern (DE)
(72) Erfinder: Macht, Egid, 81247 München (DE); Freibott, Werner, 96106 Ebern (DE)
(74) Vertreter: Oppermann, Mark

(56) Entgegenhaltungen:
- EP-A- 0 212 421
- WO-A-95/18314
- DE-A- 2 129 292
- DE-A- 3 803 268
- DE-A- 3 938 892
- DE-A- 19 523 011
- DE-A- 19 716 641
- DE-A- 19 717 486
- DE-C- 19 648 739
- US-A- 5 351 599

## Beschreibung

Die vorliegende Erfindung bezieht sich auf eine hydraulische Stellvorrichtung zur Betätigung einer Kupplung gemäß dem Oberbegriff des Patentanspruchs 1. Insbesondere bezieht sich die Erfindung auf eine hydraulische Stellvorrichtung zur schnellen und präzisen Betätigung einer Trockenreibkupplung eines Kraftfahrzeugs mit Verbrennungskraftmaschine und automatischem Schaltgetriebe.

Auch in Europa zeichnet sich ein Trend zu einer höheren Automatisierung von Kraftfahrzeugen ab. Dies ist zum einen darauf zurückzuführen, daß bei herkömmlich ausgerüsteten Kraftfahrzeugen die durch steigende Verkehrsdichte bedingte höhere Schaltfrequenz mit Betätigen der Kupplung über das Kupplungspedal und Schalten des Getriebes über den Schalthebel mehr und mehr als lästige Arbeit empfunden wird. Zum anderen muß im Hinblick auf die Forderung geringen Verbrauchs sowie die zunehmend strengeren Abgas- und Geräuschvorschriften die Verbrennungskraftmaschine gezielt in günstigen Betriebspunkten betrieben werden, um beispielsweise auch in der Warmlaufphase die vorgeschriebenen Werte einzuhalten, wozu eine Automatisierung der Schalt- und Kupplungsvorgänge unentbehrlich ist. Mechanische Stellvorrichtungen (DE 197 29 997 A1) und diesen gegenüber vorrichtungstechnisch weniger aufwendige hydraulische Stellvorrichtungen (DE 42 37 853 A1, DE 43 09 901 A1, DE 44 26 260 A1, DE 196 33 420 A1) zur automatischen Betätigung einer Trockenreibkupplung stellen eine Komponente der im Stand der Technik in diesem Zusammenhang vorgeschlagenen Automatisierungskonzepte dar.

Gemäß der gattungsbildenden DE 42 37 853 A1, der DE 43 09 901 A1 oder der DE 44 26 260 A1 wird ein mit dem Ausrücker einer Kupplung wirkverbundener Nehmerzylinder von einem Stellzylinder hydraulisch angesteuert, um die zum Ausrücken der Kupplung benötigte Kraft aufzubringen. Die Zylinderkammer des Stellzylinders ist von einem mit einem Radialdichtelement versehenen Kolben in einen Servoraum und einen Arbeitsraum unterteilt, von denen letzterer über eine Hydraulikleitung mit dem Nehmerzylinder verbunden ist. Der Druck im Arbeitsraum wird durch den Druck im Servoraum bestimmt, welcher seinerseits über ein volumenproportionales Regelventil steuerbar ist. Eine elektronische Steuerung spricht dabei auf das die momentane Stellung einer Kolbenstange des Stellzylinderkolbens repräsentierende Signal eines Weggebers an und steuert über das Regelventil volumenproportional zu einer gewünschten Stellung des Ausrückers den Druck im Servoraum des Stellzylinders.

Zur Kompensation von Stellwegänderungen am Ausrücker infolge von Belagverschleiß an der Kupplung sind beim gattungsbildenden Stand der Technik (Fig. 3 der DE 42 37 853 A1) in der Wand des Stellzylindergehäuses Ausgleichsbohrungen vorgesehen, die über eine Verbindungsleitung mit einem Vorratsbehälter für Hydraulikflüssigkeit in Verbindung stehen. Die Ausgleichsbohrung zum Arbeitsraum verbindet in der Ruhe- bzw. Ausgangsstellung des Stellzylinderkolbens den Arbeitsraum des Stellzylinders mit dem Ausgleichsbehälter und wird, wenn sich der Stellzylinderkolben bei Druckbeaufschlagung des Servoraums aus seiner Ausgangsstellung wegbewegt, von dem Radialdichtelement am Stellzylinderkolben überfahren, so daß es zu einer Unterbrechung der Verbindung zwischen Arbeitsraum und Ausgleichsbehälter kommt.

Ein Nachteil dieses Stands der Technik ist darin zu sehen, daß ein für bestimmte Anwendungsfälle erwünschtes schnelles Betätigen der Kupplung mittels der bekannten Stellvorrichtung nicht möglich ist, weil sich dabei im Stellzylinder bereits ein Druck aufbauen würde, bevor das Radialdichtelement am Stellzylinderkolben die Ausgleichsbohrung zum Arbeitsraum überfahren kann. Infolge dieses Drucks würde das Radialdichtelement gegen die Stellzylinderwandung gedrückt und bei Verschieben über die Ausgleichsbohrung zum Arbeitsraum an dieser quasi abgehobelt. Im Ergebnis käme es bereits nach wenigen schnellen Betätigungen der Stellvorrichtung zu einer dauerhaften Leckage am Stellzylinderkolben und somit zum Funktionsausfall der Stellvorrichtung.

Andererseits bestehen hier bei einem entsprechend langsamen Anfahren des Stellzylinderkolbens Probleme dahingehend, daß eine gewisse Menge an Hydraulikflüssigkeit vom Arbeitsraum über die Ausgleichsbohrung in den Ausgleichsbehälter gedrückt wird, bevor das Radialdichtelement am Stellzylinderkolben die Ausgleichsbohrung zum Arbeitsraum überfährt. Das Fehlen dieser Flüssigkeitsmenge hat eine Differenz zwischen dem am Stellzylinderkolben über den Weggeber gemessenen Hub und dem tatsächlich gefahrenen Ausrückhub am Nehmerzylinder zur Folge, so daß die Kupplungsbetätigung nicht mit der notwendigen Präzision gesteuert werden kann. Um ein ruckfreies, automatisches Schalten zu gewährleisten, ist es nämlich erforderlich, daß mittels der Stellvorrichtung eine Zwischeneinrückposition der Kupplung mit einer Genauigkeit von ± 10% des jeweils gewünschten Drehmoments angefahren werden kann, was etwa einer Positioniergenauigkeit von ± 0,1 mm Hubweg am Nehmerzylinder entspricht.

Aus der DE 196 33 420 A1 der Anmelderin ist eine hydraulische Stellvorrichtung zur Betätigung einer Reibkupplung bekannt, bei der die oben im Zusammenhang mit der Ausgleichsbohrung geschilderten Probleme nicht auftreten. Gemäß diesem Stand der Technik (Fig. 4 der DE 196 33 420 A1) wird der mit dem Ausrücker der Kupplung wirkverbundene Nehmerzylinder durch einen Servokreis direkt, d.h. ohne Zwischenschaltung eines Stellzylinders angesteuert. Um verschleißbedingte Stellwegänderungen am Ausrücker kompensieren zu können, ist die Ruhestellung des federvorgespannten Nehmerzylinderkolbens eine Schwimmstellung. Die Lage des Nehmerzylinderkolbens und die am Nehmerzylinder angreifende Reaktion der Ausrückkraft werden kontinuierlich mittels eines Weggebers am Nehmerzylinder bzw. durch Sensierung einer der Reaktion der Ausrückkraft proportionalen Größe im Servokreis erfaßt und dienen als Eingangsgrößen für die Steuerung der Kupplungsbetätigung. Diese kann jedoch systembedingt nur unter hohem meßtechnischen Aufwand, wenn überhaupt, mit der oben beschriebenen Präzision erfolgen.

Schließlich offenbaren die DE 21 29 292 A und die DE 691 01 038 T2 Stellzylinderanordnungen für hydraulische Kupplungsbetätigungen, bei denen der mit der Kupplung wirkverbundene Nehmerkolben und der Geberkolben in einem gemeinsamen Zylindergehäuse untergebracht sind und zwischen sich einen Arbeitsraum einschließen. Der jeweilige Geberkolben begrenzt auf seiner vom Arbeitsraum abgewandten Seite einen weiteren Druckraum, der im Falle der DE 21 29 292 A wahlweise von einem Servokreis mit konstantem Volumenstrom bzw. im Falle der DE 691 01 038 T2 über einen herkömmlichen, manuell betätigbaren Geberzylinder angesteuert wird. In beiden Fällen wird mit Hilfe von am Geberkolben vorgesehenen Maßnahmen (Längsnuten am Geberkolben im Falle der DE 21 29 292 A bzw. Ventilmechanismus am Geberkolben im Falle der DE 691 01 038 T2) dafür Sorge getragen, daß der Arbeitsraum und der weitere Druckraum in der Ruhestellung des Geberkolbens miteinander verbunden und in einer Betätigungsstellung des Geberkolbens voneinander getrennt sind, um eine automatische Nachstellung der Stellzylinderanordnung zur Kompensation von Kupplungsverschleiß zu gewährleisten.

Zwar treten auch bei diesem Stand der Technik die beim gattungsbildenden Stand der Technik im Zusammenhang mit der Ausgleichsbohrung im Zylindergehäuse geschilderten Probleme nicht auf. Jedoch können auch diese Lösungen die erforderliche Positioniergenauigkeit nicht zuverlässig gewährleisten und sind darüber hinaus als vorrichtungstechnisch aufwendig anzusehen. So ist die gemäß der Lehre der DE 21 29 292 A konstruktiv zwangsläufig vorgegebene Spaltdichtung zwischen Geberkolben und Zylinderwandung sehr verschmutzungsempfindlich und erfordert insbesondere bestimmte Werkstoffpaarungen mit aufwendigen Oberflächenbehandlungen sowie genaue Toleranzen. Der Ventilmechanismus gemäß der DE 691 01 038 T2 hat einen komplizierten Aufbau und bringt Stellwegverluste mit sich.

Gegenüber dem eingangs geschilderten Stand der Technik liegt der Erfindung die Aufgabe zugrunde, eine einfach aufgebaute, hydraulische Stellvorrichtung zu schaffen, die eine schnelle und präzise Betätigung der Kupplung ermöglicht.

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 9.

Erfindungsgemäß hat bei einer hydraulischen Stellvorrichtung entsprechend der im Oberbegriff des Patentanspruchs 1 angegebenen Gattung das den Geberkolben aufnehmende Gehäuse einen Versorgungsabschnitt, von dem sowohl der Anschluß zum Geberdruckraum als auch der Verbindungsabschnitt zum Nehmerdruckraum abzweigt, wobei der hydraulische Querschnitt des Verbindungsabschnitts zum Nehmerdruckraum kleiner ist als der hydraulische Querschnitt des Anschlusses zum Geberdruckraum.

Wird bei dieser Ausbildung der hydraulischen Stellvorrichtung zur Betätigung der Kupplung der Geberdruckraum über seinen vom Versorgungsabschnitt abzweigenden Anschluß hydraulisch beaufschlagt, d.h. mit einer Hydraulikflüssigkeitsströmung eines vorbestimmten Volumenstroms und eines vorbestimmten Drucks angesteuert, steht ein Druck direkt an dem Geberkolben und über den ebenfalls vom Versorgungsabschnitt abzweigenden Verbindungsabschnitt engeren hydraulischen Querschnitts auch am Nehmerdruckraum an. Der Druck im Geberdruckraum bewirkt eine sofortige Verschiebung des Geberkolbens, die ihrerseits einen Druckaufbau im Nehmerdruckraum hervorruft, der insbesondere infolge der Setzbeträge des an dem Nehmerkolben vorhandenen Dichtelements mit geringer zeitlicher Verzögerung dem Druck im Geberdruckraum nacheilen kann. Wegen des engeren hydraulischen Querschnitts des Verbindungsabschnitts kommt es zu einem Volumenstau in dem Verbindungsabschnitt, so daß über den Verbindungsabschnitt ein nur geringes Volumen von Hydraulikflüssigkeit in den Nehmerdruckraum verschoben wird bis der Geberkolben den Verbindungsabschnitt vom Nehmerdruckraum trennt. Der Nehmerkolben fährt nach Aufbau eines vorbestimmten Drucks im Nehmerdruckraum mit voller Geschwindigkeit an, um die Kupplung auszurücken. Im nicht angesteuerten Zustand der hydraulischen Stellvorrichtung kann Hydraulikflüssigkeit vom Versorgungsabschnitt über den Verbindungsabschnitt in den Nehmerdruckraum nachlaufen, um Stellwegänderungen am Ausrücker infolge von z.B. Belagverschleiß zu kompensieren bzw. Einbautoleranzen auszugleichen.

Da bei der erfindungsgemäßen Ausbildung der hydraulischen Stellvorrichtung während des Überfahrens des Verbindungsabschnitts durch den Geberkolben im Verbindungsabschnitt ein vorbestimmter Druck ansteht, der dem sich im Nehmerdruckraum aufbauenden Druck entgegenwirkt, wird selbst bei schlagartiger hydraulischer Beaufschlagung des Geberdruckraums für eine schnelle Betätigung der Kupplung das am Geberkolben vorhandene Dichtelement am Verbindungsabschnitt nicht beschädigt bzw. weist eine hohe Standfestigkeit auf. Ein vorteilhafter Nebeneffekt ist hier, daß der Geberkolben aufgrund im Vergleich zum gattungsbildenden Stand der Technik geringerer Reibkräfte energetisch äußerst günstig verschoben werden kann.

Darüber hinaus ist eine im Vergleich zum oben geschilderten Stand der Technik präzisere Betätigung der Kupplung möglich. Dies ist zum einen darauf zurückzuführen, daß bei Ansteuerung der hydraulischen Stellvorrichtung keine Hydraulikflüssigkeit aus dem Nehmerdruckraum verdrängt wird. Zum anderen wird die unter Druckaufbau im Nehmerdruckraum durch das Setzen des Dichtelements am Nehmerkolben bewirkte Volumenvergrößerung durch das geringe Volumen von Hydraulikflüssigkeit, das bei Ansteuerung der hydraulischen Stellvorrichtung aus dem Versorgungsabschnitt über den Verbindungsabschnitt in den Nehmerdruckraum überströmt, kompensiert. Im Ergebnis folgt bei Ansteuerung der hydraulischen Stellvorrichtung der Nehmerkolben der Bewegung des Geberkolbens im wesentlichen synchron, so daß die Kupplung nicht nur den Erfordernissen entsprechend schnell, d.h. mit einer Ausrückzeit von etwa 40 ms, sondern auch mit einer hohen Positioniergenauigkeit von ca. ± 0,1 mm Hubweg betätigt werden kann.

Nach der Lehre des Patentanspruchs 2 sind zum einen der Geberkolben und der Nehmerkolben in einer stufenlosen Zylinderbohrung eines gemeinsamen Gehäuses hintereinander angeordnet, wodurch eine besonders einfach ausgebildete, kostengünstige hydraulische Stellvorrichtung mit kompakten Abmaßen geschaffen wird. Weiterhin dient diese Maßnahme zusätzlich der hohen Positioniergenauigkeit der hydraulischen Stellvorrichtung, weil im Gegensatz zum gattungsbildenden Stand der Technik kein den Stellzylinder mit dem Nehmerzylinder verbindender Leitungsabschnitt vorhanden ist, der sich bei Druckbeaufschlagung aufdehnen könnte. Wenn zum anderen zwischen dem Geberkolben und dem Nehmerkolben eine Druckfeder angeordnet ist, die Geber- und Nehmerkolben gegeneinander verspannt, wird auf einfache Weise für eine spielfreie Wirkverbindung zwischen Nehmerkolben und Ausrücker der Kupplung sowie für eindeutige Endlagen von Geber- und Nehmerkolben im drucklosen Zustand der hydraulischen Stellvorrichtung gesorgt.

Der Patentanspruch 3 sieht vor, daß im Gehäuse parallel zur Zylinderbohrung ein Sackloch, vorzugsweise eine gestufte Sackbohrung, eingebracht ist, die den Versorgungsabschnitt ausbildet, was sich kostengünstig realisieren läßt.

Wenn der Geberkolben in seiner Ruhestellung auf einem Anschlag gehalten ist, der beispielsweise durch einen Gehäuseboden ausgebildet ist, wie im Patentanspruch 4 angegeben, ist der Hubbeginn in vorteilhaft einfacher Weise definiert, woraus sich auch ein Referenzwert für den Gesamthub des Geberkolbens ableiten läßt. Ein zweiter Referenzwert ergibt sich, wenn, wie ebenfalls im Patentanspruch 4 angegeben, die Betätigungsstellung des Geberkolbens durch einen Anschlag begrenzt ist, der beispielsweise durch ein in der Zylinderbohrung angebrachtes Sicherungselement ausgebildet ist. Mittels dieser beiden Referenzwerte für Hubbeginn und Hubende ist ein eindeutiges Maß für den Gesamthub des Geberkolbens gegeben, das als Referenzmaß für beispielsweise eine Funktionsüberwachungseinrichtung für die hydraulische Stellvorrichtung dienen kann. Die Begrenzung der Betätigungsstellung des Geberkolbens durch einen Anschlag hat darüber hinaus den Vorteil, daß die Kupplung mittels der hydraulischen Stellvorrichtung nicht überdrückt und somit beschädigt werden kann. Weiterhin ist an der Kupplung selbst ein Anschlag zur Wegbegrenzung nicht notwendig.

Nach der Lehre des Patentanspruchs 5 ist der Nehmerkolben ein Ringkolben, und der Nehmerdruckraum ist eine Ringkammer eines Zentralausrückers, wobei der Geberkolben eine Zylinderbohrung, die vorzugsweise im Gehäuse des Zentralausrückers ausgebildet ist, in den Geberdruckraum und einen Arbeitsdruckraum unterteilt, von denen letzterer stets mit dem Nehmerdruckraum und in der Ruhestellung des Geberkolbens über den Verbindungsabschnitt mit dem Geberdruckraum hydraulisch verbunden ist. Somit können mit geringem vorrichtungstechnischen Aufwand die Vorteile der vorliegenden Erfindung auch bei Zentralausrückern, wie sie z.B. in der DE 197 16 473 A1 der Anmelderin, der DE 31 45 363 C2 oder der EP 0 168 932 B1 offenbart werden, mit geringem Bauraumbedarf erzielt werden.

Der Patentanspruch 6 sieht vor, daß die hydraulische Stellvorrichtung eine Wegmeßeinrichtung hat, die ein am Nehmerkolben angebrachtes Signalelement und einen bezüglich des Gehäuses ortsfesten Wegsensor aufweist. Über diese Wegmeßeinrichtung kann z.B. die Funktion der hydraulischen Stellvorrichtung aus Sicherheitsgründen überwacht werden, wobei im Gegensatz zum oben diskutierten Stand der Technik vorteilhaft der tatsächlich am Ausrücker der Kupplung mittels des Nehmerkolbens aufgebrachte Hub erfaßt wird und ggf. mit dem in einer Steuerung abgespeicherten, im Zusammenhang mit der Lehre des Patentanspruchs 4 angesprochenen Referenzmaß für den Gesamthub des Geberkolbens verglichen werden kann. Durch Vorsehen des Signalelements am Nehmerkolben ist es weiterhin mit entsprechender Auswertung der Signale der Wegmeßeinrichtung möglich, in vorteilhafter Weise eine Leckage von Hydraulikflüssigkeit sowohl am Geberkolben als auch am Nehmerkolben festzustellen, weil beides ein verändertes Verhältnis des gemessenen Gesamthubs des Nehmerkolbens zum definierten Gesamthub des Geberkolbens zur Folge hätte. Weitere Vorteile dieser Sensierung des Nehmerkolbens ergeben sich auch aus der nachfolgenden Beschreibung der bevorzugten Ausführungsbeispiele.

Gemäß dem Patentanspruch 7 ist das Gehäuse mit einem zur Zylinderbohrung parallelen Sackloch versehen, in dem der Wegsensor für den Nehmerkolben aufgenommen ist. Der Wegsensor ist daher auf einfache Weise vor Umgebungseinflüssen, die beispielsweise eine Korrosion des Wegsensors zur Folge haben könnten, geschützt. Außerdem ist somit eine genaue und einfache Positionierung des Wegsensors möglich.

Wenn das Gehäuse im Bereich des Nehmerdruckraums einen Spülanschluß aufweist, wie im Patentanspruch 8 angegeben, kann der Nehmerdruckraum in vorbestimmten zeitlichen Abständen mit Hydraulikflüssigkeit gespült werden, um beispielsweise Wärmedehnungen infolge von aufgeheizter Hydraulikflüssigkeit in der hydraulischen Stellvorrichtung zu vermeiden, die zu einer Relativschiebung zwischen Geber- und Nehmerkolben und somit zu einer negativen Beeinflussung der Positioniergenauigkeit führen könnten.

Es hat sich schließlich gezeigt, daß es im Hinblick auf eine sehr hohe Positioniergenauigkeit der hydraulischen Stellvorrichtung insbesondere von Vorteil ist, wenn das Verhältnis des hydraulischen Querschnitts des Anschlusses zum Geberdruckraum zum hydraulischen Querschnitt des Verbindungsabschnitts zum Nehmerdruckraum größer gleich 30 ist, wie im Patentanspruch 9 angegeben.

Im folgenden wird die Erfindung anhand bevorzugter Ausführungsbeispiele unter Bezugnahme auf die beigefügte Zeichnung näher erläutert. Darin zeigen:
Die Fig. 1 eine prinzipielle Darstellung eines ersten Ausführungsbeispiels der erfindungsgemäßen hydraulischen Stellvorrichtung, die zwischen einem hydraulischen Servokreis und einem Ausrücker einer Reibkupplung vorgesehen ist,
die Fig. 2 eine Draufsicht auf die erfindungsgemäße hydraulische Stellvorrichtung von links in Fig. 1,
die Fig. 3 eine Schnittansicht der erfindungsgemäßen hydraulischen Stellvorrichtung entsprechend der Linie A-A in Fig. 2,
die Fig. 4 eine Schnittansicht der erfindungsgemäßen hydraulischen Stellvorrichtung entsprechend der Linie B-B in Fig. 2,
die Fig. 5 eine vergrößerte Teilschnittansicht der erfindungsgemäßen hydraulischen Stellvorrichtung entsprechend dem Detail X in Fig. 1 und der Schnittebene gemäß Fig. 3,
die Fig. 6 eine prinzipielle Darstellung eines zweiten Ausführungsbeispiels der erfindungsgemäßen hydraulischen Stellvorrichtung, bei der im Bereich des Nehmerdruckraums ein gesondert angesteuerter Spülanschluß vorgesehen ist, und
die Fig. 7 eine prinzipielle Darstellung eines dritten Ausführungsbeispiels der erfindungsgemäßen hydraulischen Stellvorrichtung in Verbindung mit einem Zentralausrücker.

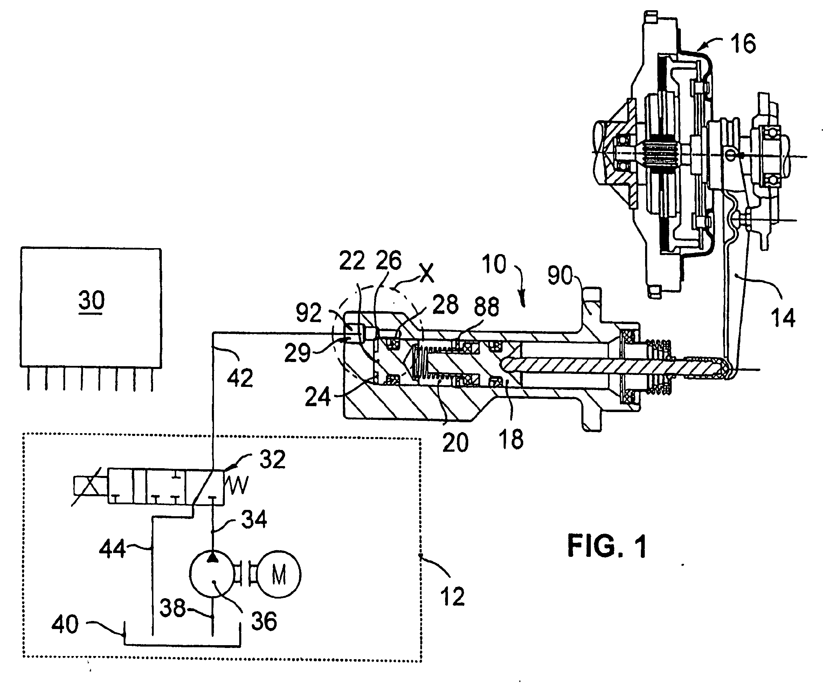

Die Fig. 1 bis 5 zeigen eine hydraulische Stellvorrichtung 10 gemäß einem ersten Ausführungsbeispiel in Ruhestellung, d.h. in einem Zustand, in dem die hydraulische Stellvorrichtung 10 nicht hydraulisch beaufschlagt ist. Die hydraulische Stellvorrichtung 10 ist zwischen einem unten noch näher beschriebenen hydraulischen Servokreis 12 und einem Ausrücker 14 einer Trockenreibkupplung 16 für Kraftfahrzeuge angeordnet und dient dazu, die Trockenreibkupplung 16 über den Ausrücker 14 in Öffnungsrichtung zu betätigen. Die Trockenreibkupplung 16 ist an sich bekannt und wird daher im folgenden nicht näher erläutert.

Gemäß insbesondere den Fig. 1, 3 und 5 hat die hydraulische Stellvorrichtung 10 einen Nehmerkolben 18, der einen Nehmerdruckraum 20 begrenzt und mit dem Ausrücker 14 der Trockenreibkupplung 16 in Wirkeingriff steht. Weiterhin weist die hydraulische Stellvorrichtung 10 einen Geberkolben 22 auf, der in einem Gehäuse 46 mittels eines Dichtelements 62 einen Geberdruckraum 24 hydraulisch begrenzt und bei hydraulischer Beaufschlagung des Geberdruckraums 24 über einen Anschluß 26 des Geberdruckraums 24 von einer in den Figuren dargestellten Ruhestellung in eine Betätigungsstellung verfährt, in der der Geberkolben 22 den Nehmerkolben 18 über den Nehmerdruckraum 20 hydraulisch beaufschlagt. Der Nehmerdruckraum 20 ist in der Ruhestellung des Geberkolbens 22 mit dem Geberdruckraum 24 über einen Verbindungsabschnitt 28 im Gehäuse 46 hydraulisch verbunden. In seiner Betätigungsstellung unterbricht der Geberkolben 22 diese hydraulische Verbindung. Genauer gesagt überfährt der Geberkolben 22 mit seinem Dichtelement 62 den Verbindungsabschnitt 28, wenn sich der Geberkolben 22 infolge einer Druckbeaufschlagung des Geberdruckraums 24 durch den hydraulischen Servokreis 12 aus seiner Ruhestellung in seine Betätigungsstellung nach rechts in den Figuren bewegt, und sorgt in seiner Betätigungsstellung für eine hydraulische Trennung des Verbindungsabschnitts 28 vom Nehmerdruckraum 20. Ferner weist das Gehäuse 46 einen Versorgungsabschnitt 29 auf, von dem quasi in einer Parallelschaltung sowohl der Anschluß 26 zum Geberdruckraum 24 als auch der Verbindungsabschnitt 28 zum Nehmerdruckraum 20 abzweigt. Dabei ist der hydraulische Querschnitt d des Verbindungsabschnitts 28 zum Nehmerdruckraum 20 kleiner ausgebildet als der hydraulische Querschnitt D des Anschlusses 26 zum Geberdruckraum 24.

Der mittels einer elektronischen Steuerung 30 ansteuerbare hydraulische Servokreis 12 hat ein Proportionalventil 32 in 3/3-Ausführung, das eingangsseitig über eine Druckleitung 34 an eine Hydraulikpumpe 36 angeschlossen ist, die wahlweise mittels z.B. eines Elektromotors M angetrieben werden kann, um Hydraulikflüssigkeit über eine Ansaugleitung 38 aus einem Vorratsbehälter 40 zu fördern. Ausgangsseitig ist das Proportionalventil 32 über eine Druckleitung 42 mit dem Versorgungsabschnitt 29 der hydraulischen Stellvorrichtung 10 verbunden. Schließlich ist das Proportionalventil 32 noch über eine Entlastungsleitung 44 an den Vorratsbehälter 40 angeschlossen. In seiner federvorgespannten Grundstellung verbindet das Proportionalventil 32 die Druckleitung 42 mit der Entlastungsleitung 44 und somit den Versorgungsabschnitt 29 der hydraulischen Stellvorrichtung 10 druckentlastend mit dem Vorratsbehälter 40. Bei elektromagnetischer Ansteuerung des Proportionalventils 32 verbindet das Proportionalventil 32 die Druckleitung 34 mit der Druckleitung 42 und somit die Hydraulikpumpe 36 mit dem Versorgungsabschnitt 29 der hydraulischen Stellvorrichtung 10, um die hydraulische Stellvorrichtung 10 mit einer variablen Flüssigkeitsströmung mit jeweils definiertem Volumenstrom und definiertem Druck zu versorgen. In Abhängigkeit vom erforderlichen Volumenstrom bzw. vom erforderlichen Druckpotential kann ein Druckspeicher (nicht dargestellt) an die Druckleitung 34 angeschlossen sein.

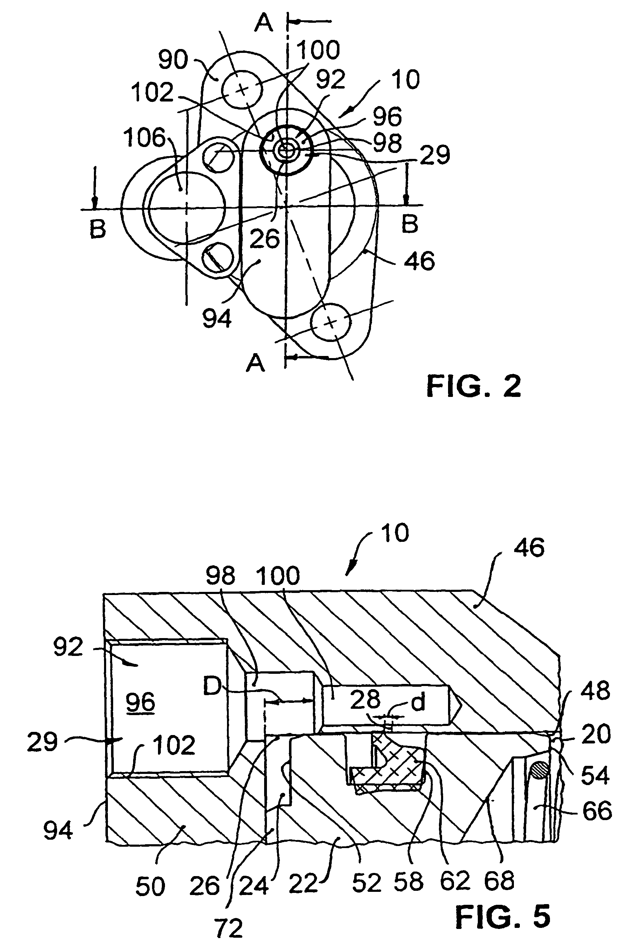

In den Fig. 2 bis 5 ist die hydraulische Stellvorrichtung 10 näher dargestellt. Das Gehäuse 46 der Stellvorrichtung 10 besteht vorzugsweise aus Kunststoff oder Aluminium. In das Gehäuse 46 ist eine als Sackbohrung ausgeführte Zylinderbohrung 48 mit in ihren Wirkbereichen im wesentlichen konstantem Innendurchmesser eingebracht. In der somit stufenlos ausgebildeten Zylinderbohrung 48 sind der Geberkolben 22 und der Nehmerkolben 18, die vorzugsweise aus einem nicht-magnetischen Werkstoff wie Kunststoff oder Aluminium bestehen, in Reihe hintereinander angeordnet. Die Zylinderbohrung 48 schließt zusammen mit einem Gehäuseboden 50 und der in den Figuren linken Stirnfläche 52 des Geberkolbens 22 den Geberdruckraum 24 ein. Der Nehmerdruckraum 20 wird von der Zylinderbohrung 48, der in den Figuren rechten Stirnfläche 54 des Geberkolbens 22 und der in den Figuren linken Stirnfläche 56 des Nehmerkolbens 18 eingeschlossen.

Der Geberkolben 22 und der Nehmerkolben 18 weisen den gleichen Außendurchmesser auf, haben in der Zylinderbohrung 48 ein geringes Radialspiel und sind jeweils mit einer Nut 58, 60 am Außenumfang versehen. In der Nut 60 ist - wie in der Nut 58 für das Dichtelement 62 - ein elastomeres Dichtelement 64, beispielsweise ein herkömmlicher Nutring, vorgesehen, wobei die Dichtelemente 62, 64 hydraulisch dicht an der Zylinderbohrung 48 anliegen. In den Figuren sind die Dichtelemente 62, 64 im unverformten Zustand dargestellt. Tatsächlich liegen sie jedoch an der jeweiligen Gegenfläche an.

Zwischen dem Geberkolben 22 und dem Nehmerkolben 18 ist im Nehmerdruckraum 20 eine Druckfeder 66 angeordnet, die am Geberkolben 22 in einer Aussparung 68 der nehmerdruckraumseitigen Stirnfläche 54 zentriert ist und eine bolzenförmige Kolbenverlängerung 70 des Nehmerkolbens 18 konzentrisch umgibt. Die Druckfeder 66 drückt in der Ruhestellung der hydraulischen Stellvorrichtung 10 den Geberkolben 22 mit einem zylindrischen Ansatz 72 gegen den Gehäuseboden 50. Der an der geberdruckraumseitigen Stirnfläche 52 des Geberkolbens 22 ausgebildete Ansatz 72 hat einen Außendurchmesser, der kleiner ist als der Innendurchmesser der Zylinderbohrung 48. Gleichzeitig drückt die Druckfeder 66 in der Ruhestellung der hydraulischen Stellvorrichtung 10 den Nehmerkolben 18 in den Figuren nach rechts, so daß eine in einer kugelpfannenförmigen Aussparung 74 auf der von dem Nehmerdruckraum 20 abgewandten Seite des Nehmerkolbens 18 gelenkig mit ihrem Kugelkopf 76 aufgenommene Kolbenstange 78 mit dem Ausrücker 14 ohne Spiel in Eingriff steht.

Am sich konisch erweiternden offenen Ende der Zylinderbohrung 48 ist in einem zylindrischen Absatz 80 des Gehäuses 46 eine elastomere Schutzkappe 82 in Form eines Faltenbalgs mit einem Ende montiert, während das andere Ende der Schutzkappe 82 an einer Nut 84 der Kolbenstange 78 befestigt ist. Die Schutzkappe 82 dient dazu, das Eindringen von Verunreinigungen in die Zylinderbohrung 48 zu verhindern.

Zu erwähnen ist an dieser Stelle noch, daß auch die Betätigungsstellung des Geberkolbens 22 in den Fig. 1, 3 und 4 nach rechts durch einen Anschlag begrenzt ist. Dazu hat die Zylinderbohrung 48 einen radialen Einstich 86, in dem ein Sicherungselement 88 befestigt ist. Der von dem Geberkolben 22 in der Zylinderbohrung 48 maximal zurücklegbare Weg zwischen seiner Ruhestellung auf Anschlag am Gehäuseboden 50 und der Stellung, in der der Geberkolben 22 mit seiner Stirnfläche 54 am Sicherungselement 88 anschlägt, entspricht dem Ausrückweg der Trockenreibkupplung 16. Dieser maximale Hub des Geberkolbens 22 ist in der elektronischen Steuerung 30 als Bezugs- oder Referenzwert abgespeichert.

Wie insbesondere den Fig. 2, 3 und 5 zu entnehmen ist, hat das außen einen Flansch 90 zur Befestigung an beispielsweise einer Spritzwand (nicht dargestellt) eines Kraftfahrzeugs aufweisende Gehäuse 46 eine gestufte Sackbohrung 92, die sich ausgehend von der gehäusebodenseitigen Stirnfläche 94 des Gehäuses 46 parallel zur Zylinderbohrung 48 erstreckt und den Versorgungsabschnitt 29 ausbildet. Von der Sackbohrung 92 zweigen der Anschluß 26 des Geberdruckraums 24 und der Verbindungsabschnitt 28 zum Nehmerdruckraum 20 ab, wie im folgenden näher beschrieben wird.

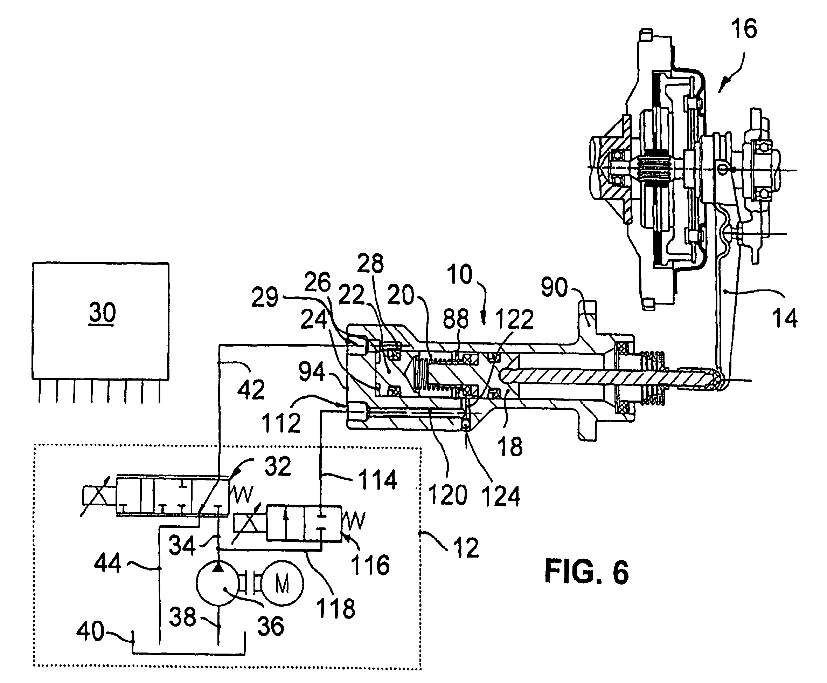

Gemäß insbesondere den Fig. 2 und 5 hat die Sackbohrung 92 drei zylindrische, mittels konischen Übergangsabschnitten getrennte Bohrungsabschnitte 96, 98 und 100, deren Innendurchmesser sich ausgehend von der Stirnfläche 94 verkleinert. Der im Durchmesser größte Bohrungsabschnitt 96 ist mit einem Innengewinde 102 versehen, über das die Druckleitung 42 mittels eines geeigneten Anschlußstücks (nicht dargestellt) an die hydraulische Stellvorrichtung 10 angeschlossen werden kann. Der mittlere Bohrungsabschnitt 98 liegt derart achsversetzt zur Zylinderbohrung 48 und hat einen derartigen Innendurchmesser, daß er die Zylinderbohrung 48 in vorbestimmter Weise schneidet, wodurch der Anschluß 26 des Geberdruckraums 24 als fensterartiger Ausschnitt mit rechteckigem Querschnitt D ausgebildet ist. Der im Durchmesser kleinste Bohrungsabschnitt 100 verläuft in axialer Richtung über die Nut 58 des in seiner Ruhestellung befindlichen Geberkolbens 22 hinaus. Der Bohrungsabschnitt 100 ist mit der Zylinderbohrung 48 über den Verbindungsabschnitt 28 verbunden, der in der Ruhestellung des Geberkolbens 22 in axialer Richtung kurz hinter der Dichtkante des Dichtelements 62 auf der Nehmerdruckraumseite des Dichtelement 62 in der Zylinderbohrung 48 mündet und somit über einen Ringspalt am Geberkolben 22 mit dem Nehmerdruckraum 20 kommuniziert.

Der Verbindungsabschnitt 28 ist wie eine Druckausgleichs- oder Nachlaufbohrung eines an sich bekannten Geberzylinders ausgebildet und hat demgemäß einen Durchmesser d von 0,7 mm ± 0,1 mm. Um Strömungsverluste so gering wie möglich zu halten, sollte der hydraulische Querschnitt D des Anschlusses 26 des Geberdruckraums 24 mindestens so groß wie der hydraulische Querschnitt der Druckleitung 42 sein. Das Verhältnis des hydraulischen Querschnitts D des Anschlusses 26 des Geberdruckraums 24 zum hydraulischen Querschnitt d des Verbindungsabschnitts 28 zum Nehmerdruckraum 20 ist möglichst groß, vorzugsweise größer gleich 30 zu wählen.

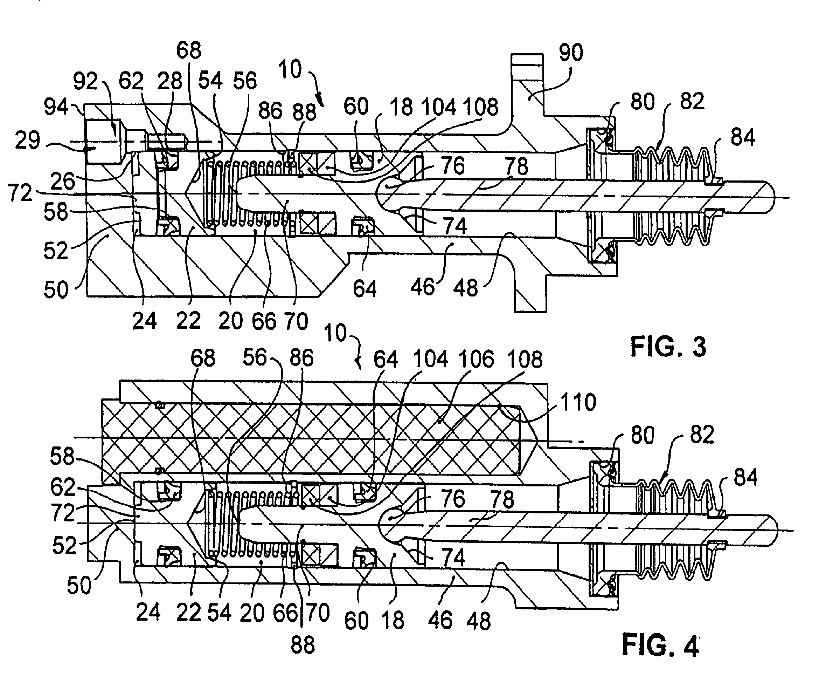

Die hydraulische Stellvorrichtung 10 ist schließlich noch mit einer Wegmeßeinrichtung versehen, die, wie die Fig. 4 zeigt, ein am Nehmerkolben 18 angebrachtes Signalelement 104 und einen bezüglich des Gehäuse 46 ortsfesten Wegsensor 106 aufweist. Bei dem Signalelement 104 handelt es sich um einen ringförmigen Magneten, der auf die Kolbenverlängerung 70 des Nehmerkolbens 18 aufgesteckt und dort unter Zwischenfügung eines Distanzrings 108 gesichert ist. Der Distanzring 108 besteht aus Kunststoff, um störende Einflüsse der am Distanzring 108 anliegenden, ferro-magnetischen Druckfeder 66 auszuschließen. Der elektrisch an die elektronische Steuerung 30 angeschlossene Wegsensor 106 ist in einem Sackloch 110 mit über die Länge konstantem Innendurchmesser aufgenommen, welches ausgehend von der Stirnfläche 94 parallel zur Zylinderbohrung 48 in das Gehäuse 46 eingebracht ist, und durch geeignete Befestigungsmittel am Gehäuse 46 befestigt. Es ist ersichtlich, daß mittels der Wegmeßeinrichtung die Ruhestellung und die Betätigungsstellung sowie der Hub des Nehmerkolbens 18 und somit mittelbar der Ausrückweg des Ausrückers 14 der Trockenreibkupplung 16 erfaßt werden können.

In den Figuren wurde aus Gründen der Übersichtlichkeit darauf verzichtet, die elektrischen Verbindungen zwischen der elektronischen Steuerung 30 einerseits und dem Wegsensor 106 der Wegmeßeinrichtung, dem Elektroantrieb des Proportionalventils 32 und dem Elektromotor M andererseits darzustellen.

Im folgenden wird die Funktionsweise der hydraulischen Stellvorrichtung 10 näher erläutert.

Soll die Trockenreibkupplung 16 mittels der hydraulischen Stellvorrichtung 10 für einen Schaltvorgang ausgerückt werden, wird über die elektronische Steuerung 30 der Elektromotor M zum Antrieb der Hydraulikpumpe 36 angesteuert und das Proportionalventil 32 in eine die Druckleitung 34 mit der Druckleitung 42 verbindende Stellung geschaltet. Die Hydraulikpumpe 36 fördert nun aus dem Vorratsbehälter 40 Hydraulikflüssigkeit über die Ansaugleitung 38, die Druckleitung 34, das Proportionalventil 32 und die Druckleitung 42 in die Sackbohrung 92 des Gehäuses 46 der hydraulischen Stellvorrichtung 10. Im Ergebnis wird der Geberdruckraum 24 und somit der Geberkolben 22 auf seiner Stirnfläche 52 über den Anschluß 26 im Bohrungsabschnitt 98 der Sackbohrung 92 hydraulisch voll beaufschlagt, so daß der Geberkolben 22 ohne Verzögerung anfährt.

Dabei bildet sich im durchmesserkleinsten Bohrungsabschnitt 100 der Sackbohrung 92 ein Durchflußstau vor dem Verbindungsabschnitt 28, mit einem geringfügigen Übertritt von Hydraulikflüssigkeit aus dem Bohrungsabschnitt 100 über den Verbindungsabschnitt 28 und den Ringspalt am Geberkolben 22 in den Nehmerdruckraum 20, in dem nach Anfahren des Geberkolbens 22 ein dem Druck im Geberdruckraum 24 annähernd gleicher Druck ansteht. Infolge des Volumenverlustes im Nehmerdruckraum 20 aufgrund des Setzens der druckbeaufschlagten Dichtelemente 62, 64 fährt der an seiner Stirnfläche 56 druckbeaufschlagte Nehmerkolben 18 mit geringer zeitlicher Verzögerung zum Geberkolben 22 an. Da über den Verbindungsabschnitt 28 aber eine geringfügige Menge an Hydraulikflüssigkeit in den Nehmerdruckraum 20 übergetreten ist, stellt sich zwischen dem Geberkolben 22 und dem Nehmerkolben 18 im wesentlichen kein Relativwegverlust ein.

Nun überfährt der Geberkolben 22 mit seinem Dichtelement 62 den Verbindungsabschnitt 28, wobei das Dichtelement 62 infolge des im Verbindungsabschnitt 28 anstehenden Drucks keinen Schaden nimmt, und schiebt über die Flüssigkeitssäule im Nehmerdruckraum 20 und die Druckfeder 66 den Nehmerkolben 18 vor sich her, bis der Geberkolben 22 mit seiner Stirnfläche 54 am Sicherungselement 88 anschlägt. Im Ergebnis ist die Trockenreibkupplung 16 mittels des Ausrückers 14, der mit dem Nehmerkolben 18 über die Kolbenstange 78 wirkverbunden ist, schnell und präzise ausgerückt.

Über die aus Signalelement 104 am Nehmerkolben 18 und Wegsensor 106 in dem Sackloch 110 des Gehäuses 46 bestehende Wegmeßeinrichtung wird der vom Nehmerkolben 18 zurückgelegte Weg erfaßt, in der elektronischen Steuerung 30 gespeichert und dort mit einem bereits gespeicherten Referenzhub verglichen. Ergibt der Vergleich, daß der Nehmerkolben 18 den zum vollständigen Ausrücken der Trockenreibkupplung 16 benötigten Weg zurückgelegt hat, was bestätigt, daß an den Dichtelementen 62, 64 keine Leckage vorliegt, wird der Schaltvorgang mittels Schaltzylindern (nicht dargestellt) im mechanischen Getriebe (nicht dargestellt) durchgeführt, wie es beispielsweise in der DE 196 33 420 A1 der Anmelderin unter Bezugnahme auf die Fig. 5 dieser Schrift beschrieben ist.

Ist der Schaltvorgang beendet, wird mittels der elektronischen Steuerung 30 der Einrückvorgang der Trockenreibkupplung 16 eingeleitet. Dabei wird ausgehend vom dem in der elektronischen Steuerung 30 abgespeicherten, insgesamt zurückgelegten Ist-Hub des Nehmerkolbens 18 eine Zwischenposition des Ausrückers 14 zur Synchronisation von Antriebs- und Abtriebsstrang genau angefahren, um ein ruckfreies Einrücken der Trockenreibkupplung 16 zu ermöglichen, wozu die elektronische Steuerung 30 den Elektromotor M abstellt und die Druckleitung 42 mittels des Proportionalventils 32 und über die Entlastungsleitung 44 mit dem Vorratsbehälter 40 in definierter Weise verbindet. Im Ergebnis wird der Geberkolben 22 aufgrund der vom Ausrücker 14 über die Kolbenstange 78 auf den Nehmerkolben 18 wirkenden Rückstellkraft über die im Nehmerdruckraum 20 befindliche Flüssigkeitssäule und aufgrund der Federkraft der Druckfeder 66 zwischen dem Nehmerkolben 18 und dem Geberkolben 22 in definierter Weise auf eine entsprechende Zwischenposition und darüber hinaus wieder auf seinen Anschlag am Gehäuseboden 50 verschoben. Bei dieser Verschiebung wird die vom Geberkolben 22 aus dem Geberdruckraum 24 über den Anschluß 26 verdrängte Hydraulikflüssigkeit über die an der Sackbohrung 92 des Gehäuses 46 angeschlossene Druckleitung 42, das Proportionalventil 32 und die Entlastungsleitung 44 in den Vorratsbehälter 40 zurückgeführt. Mit Überfahren des Verbindungsabschnitts 28 durch das Dichtelement 62 am Geberkolben 22 wird auch der Nehmerdruckraum 20 auf die gleiche Weise drucklos zum Vorratsbehälter 40 verbunden.

Im nicht zum Ausrücken der Trockenreibkupplung 16 angesteuerten Zustand der hydraulischen Stellvorrichtung 10 kann Hydraulikflüssigkeit über den Verbindungsabschnitt 28 in den Nehmerdruckraum 20 nachlaufen, um Stellwegänderungen am Ausrücker 14 infolge von z.B. Belagverschleiß oder Wärmedehnungen zu kompensieren, geringfügige Leckagen bzw. Einbautoleranzen auszugleichen, etc. Dies kann mit Unterstützung des hydraulischen Servokreises 12 geschehen, indem dieser mittels der elektronischen Steuerung 30 derart angesteuert wird, daß Hydraulikflüssigkeit mit nur einem geringen Volumenstrom der hydraulischen Stellvorrichtung 10 zugeführt wird. Aufgrund dieser langsamen Zufuhr von Hydraulikflüssigkeit kann diese über den Verbindungsabschnitt 28 in den Nehmerdruckraum 20 übertreten, ohne daß sich der Geberkolben 22 bewegt und den Verbindungsabschnitt 28 vom Nehmerdruckraum 20 trennt.

Auf die gleiche Weise kann der Nehmerdruckraum 20 über den in Bezug zur Einbaulage stets am höchsten Punkt der Zylinderbohrung 48 liegenden Verbindungsabschnitt 28 entlüftet werden und/oder im Nehmerdruckraum 20 befindliche Hydraulikflüssigkeit ausgetauscht werden, um einen negativen Einfluß von im Nehmerdruckraum 20 befindlicher, erhitzter Hydraulikflüssigkeit auf die Stellgenauigkeit der hydraulischen Stellvorrichtung 10 auszuschließen. Dies kann in vorbestimmten zeitlichen Abständen und/oder in Abhängigkeit von der mittels eines Temperatursensors (nicht dargestellt) gemessenen Temperatur der im Nehmerdruckraum 20 befindlichen Hydraulikflüssigkeit erfolgen. Dabei wird die hydraulische Stellvorrichtung 10 wie oben beschrieben langsam hydraulisch beaufschlagt, so daß sich der Geberkolben 22 aufgrund des sich auch im Nehmerdruckraum 20 aufbauenden Drucks und der Federkraft der Druckfeder 66 nicht aus seiner Ruhestellung wegbewegt. Bei entsprechender Auslegung der hydraulischen Stellvorrichtung 10 bewirkt dieser Druckaufbau im Nehmerdruckraum 20 sogar eine geringfügige Verschiebung des Nehmerkolbens 18 nach rechts in den Fig. 1, 3 und 4. Wird nun die Zufuhr von Hydraulikflüssigkeit über die elektronische Steuerung 30 mittels des Proportionalventils 32 unterbrochen und die Druckleitung 42 zum Vorratsbehälter 40 hin entlastet, fährt der Nehmerkolben 18 infolge der vom Ausrücker 14 auf ihn wirkenden Kraft in seine Ausgangsstellung zurück, wobei Hydraulikflüssigkeit über den Verbindungsabschnitt 28 aus dem Nehmerdruckraum 20 hinaus verdrängt wird. Dieses langsame Be- und Entlasten der hydraulischen Stellvorrichtung 10 kann wiederholt durchgeführt werden, so daß sich zum Austausch der Hydraulikflüssigkeit im Nehmerdruckraum 20 quasi ein Pumpbetrieb einstellt.

Auch ist auf diese Weise eine kontrollierte Selbstbefüllung der hydraulischen Stellvorrichtung mit Hydraulikflüssigkeit möglich. Derartige Befüll-, Austausch- und/oder Entlüftungsroutinen können mittels der elektronischen Steuerung 30 vorteilhaft automatisch eingeleitet und durchgeführt werden, wobei die jeweilige Routine in Abhängigkeit von dem Nehmerkolbenhub gestartet bzw. gesteuert werden kann, welcher mittels der aus Signalelement 104 und Wegsensor 106 bestehenden Wegmeßeinrichtung sensiert wird.

Die Fig. 6 zeigt ein zweites Ausführungsbeispiel der hydraulischen Stellvorrichtung 10 in Ruhestellung. Den Teilen bzw.

Baugruppen des unter Bezugnahme auf die Fig. 1 bis 5 beschriebenen ersten Ausführungsbeispiels gleiche oder entsprechende Teile bzw. Baugruppen sind mit den gleichen Bezugszahlen versehen und werden im folgenden nicht nochmals erläutert.

Gemäß dem zweiten Ausführungsbeispiel ist an der hydraulischen Stellvorrichtung 10 zusätzlich ein Spülanschluß 112 vorgesehen, der über eine Druckleitung 114, ein elektromagnetisch betätigbares, in Sperrstellung vorgespanntes Schaltventil 116 und eine Druckleitung 118 wahlweise mit der Druckleitung 34 zwischen der Hydraulikpumpe 36 und dem Proportionalventil 32 verbunden werden kann. Der Spülanschluß 112 hat eine gestufte Sackbohrung 120, die ausgehend von der Stirnfläche 94 des Gehäuses 46 parallel zur Zylinderbohrung 48 sowie parallel und winkelversetzt zu der gestuften Sackbohrung 92 und dem Sackloch 110 in das Gehäuse 46 eingebracht ist. Die Sackbohrung 120 mündet in einer Querbohrung 122 des Gehäuses 46, die zur Außenseite der hydraulischen Stellvorrichtung 10 mittels eines Verschlusses 124 hydraulisch abgedichtet ist. Die Querbohrung 122 endet in der Zylinderbohrung 48 des Gehäuses 46 und verbindet in der Ruhestellung der Kolben 18, 22 die Sackbohrung 120 mit dem Nehmerdruckraum 20.

Es ist ersichtlich, daß mittels der elektronischen Steuerung 30 der Elektromotor M, das Proportionalventil 32 und das Schaltventil 116 des hydraulischen Servokreises 12 geeignet angesteuert werden können, um den Nehmerdruckraum 20 über den Spülanschluß 112 und den Verbindungsabschnitt 28 zur Sackbohrung 92 zu spülen. Dieses Umwälzen von Hydraulikflüssigkeit vermeidet nicht nur Wärmestaus und deren nachteilige Auswirkungen auf das Gehäuse 46, die Kolben 18, 22, die Dichtelemente 62, 64 und insbesondere die Wegmeßeinrichtung, sondern dient auch der Entlüftung der hydraulischen Stellvorrichtung 10 und dem Entfernen von Schmutzpartikeln. Darüber hinaus kann die hydraulische Stellvorrichtung 10 über den Spülanschluß 112 mit Hydraulikflüssigkeit befüllt werden.

Das zweite Ausführungsbeispiel eignet sich insbesondere für Betriebszustände, bei denen es darauf ankommt, den Nehmerdruckraum 20 schnell zu spülen, um Überhitzungen und damit verbundene Schäden zu vermeiden.

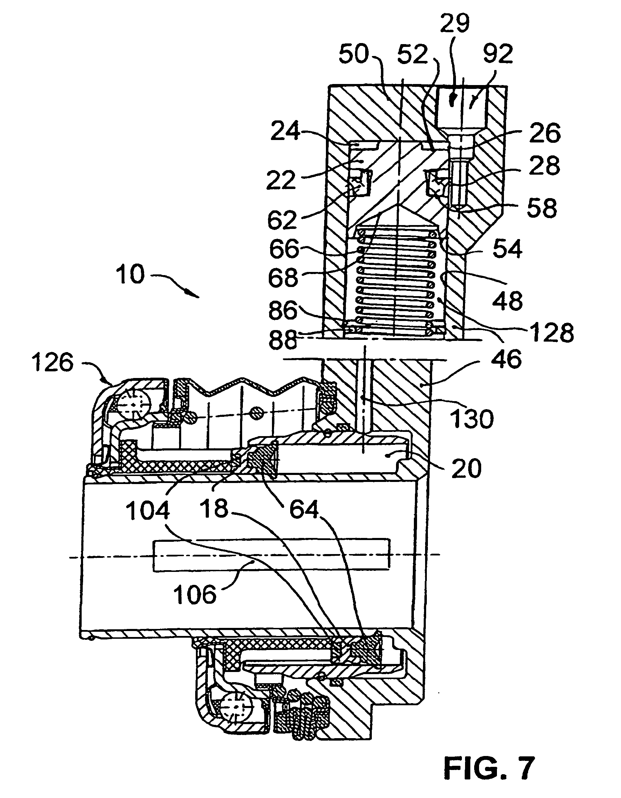

Die Fig. 7 zeigt schließlich ein drittes Ausführungsbeispiel der hydraulischen Stellvorrichtung 10, wobei sich der Geberkolben 22 in seiner Ruhestellung befindet, während der Nehmerkolben 18 im mittleren Teil der Fig. 7 in seiner Betätigungsstellung und im unteren Teil der Fig. 7 in seiner Ruhestellung dargestellt ist. Den Teilen bzw. Baugruppen des unter Bezugnahme auf die Fig. 1 bis 5 beschriebenen ersten Ausführungsbeispiels gleiche oder entsprechende Teile bzw. Baugruppen sind mit den gleichen Bezugszahlen versehen und werden im folgenden nur insoweit erläutert, als es für das Verständnis des dritten Ausführungsbeispiels notwendig erscheint.

Gemäß Fig. 7 ist der Nehmerkolben 18 ein Ringkolben und der Nehmerdruckraum 20 eine Ringkammer eines Zentralausrückers 126. Was den grundsätzlichen Aufbau und die grundsätzliche Funktion des Zentralausrückers 126 angeht, kann an dieser Stelle auf die DE 197 16 473 A1 der Anmelderin verwiesen werden.

Der Geberkolben 22 unterteilt eine im Gehäuse 46 des Zentralausrückers 126 ausgebildete Zylinderbohrung 48 in den Geberdruckraum 24 und einen Arbeitsdruckraum 128. Der Arbeitsdruckraum 128 ist über eine Verbindungsbohrung 130 stets mit dem Nehmerdruckraum 20 verbunden. In der Ruhestellung des Geberkolbens 22 ist der Nehmerdruckraum 20 wie oben beschrieben über den Verbindungsabschnitt 28 mit dem Geberdruckraum 24 hydraulisch verbunden. Die Funktion des dritten Ausführungsbeispiels entspricht der des ersten Ausführungsbeispiels und wird daher nicht nochmals beschrieben.

Für den Fachmann ist ersichtlich, daß den Einbauerfordernissen entsprechend anstelle der Verbindungsbohrung 130 auch eine Verbindungsleitung (nicht dargestellt) vorgesehen werden kann, die eine an den hydraulischen Servokreis 12 angeschlossene erste Kolben-Zylinder-Anordnung, welche Geberkolben 22, Geberdruckraum 24, Anschluß 26, Verbindungsabschnitt 28 und Arbeitsdruckraum 128 wie oben beschrieben aufweist, mit einer davon räumlich getrennten zweiten Kolben-Zylinder-Anordnung verbindet, die Nehmerkolben 18 und Nehmerdruckraum 20 umfaßt und als normaler Stellzylinder oder Zentralausrücker 126 ausgebildet ist.

### Bezugszeichenliste

- 10: hydraulische Stellvorrichtung
- 12: hydraulischer Servokreis
- 14: Ausrücker
- 16: Trockenreibkupplung
- 18: Nehmerkolben
- 20: Nehmerdruckraum
- 22: Geberkolben
- 24: Geberdruckraum
- 26: Anschluß
- 28: Verbindungsabschnitt
- 29: Versorgungsabschnitt
- 30: elektronische Steuerung
- 32: Proportionalventil
- 34: Druckleitung
- 36: Hydraulikpumpe
- 38: Ansaugleitung
- 40: Vorratsbehälter
- 42: Druckleitung
- 44: Entlastungsleitung
- 46: Gehäuse
- 48: Zylinderbohrung
- 50: Gehäuseboden
- 52: Stirnfläche
- 54: Stirnfläche
- 56: Stirnfläche
- 58: Nut
- 60: Nut
- 62: Dichtelement
- 64: Dichtelement
- 66: Druckfeder
- 68: Aussparung
- 70: Kolbenverlängerung
- 72: zylindrischer Ansatz
- 74: Aussparung
- 76: Kugelkopf
- 78: Kolbenstange
- 80: Absatz
- 82: Schutzkappe
- 84: Nut
- 86: Einstich
- 88: Sicherungselement
- 90: Flansch
- 92: Sackbohrung
- 94: Stirnfläche
- 96: Bohrungsabschnitt
- 98: Bohrungsabschnitt
- 100: Bohrungsabschnitt
- 102: Innengewinde
- 104: Signalelement
- 106: Wegsensor
- 108: Distanzring
- 110: Sackloch
- 112: Spülanschluß
- 114: Druckleitung
- 116: Schaltventil
- 118: Druckleitung
- 120: Sackbohrung
- 122: Querbohrung
- 124: Verschluß
- 126: Zentralausrücker
- 128: Arbeitsdruckraum
- 130: Verbindungsbohrung

- d: Querschnitt des Verbindungsabschnitts 28
- D: Querschnitt des Anschlusses 26
- M: Elektromotor

## Patentansprüche

1. Hydraulische Stellvorrichtung (10) zur Betätigung einer Kupplung (16), insbesondere für Kraftfahrzeuge, mit einem Geberkolben (22), der in einem Gehäuse (46) mittels eines Dichtelements (62) einen Geberdruckraum (24) hydraulisch begrenzt, welcher über einen Anschluß (26) hydraulisch beaufschlagbar ist, um den Geberkolben (22) von einer Ruhestellung in eine Betätigungsstellung zu bewegen, in der der Geberkolben (22) einen mit der Kupplung (16) in Wirkeingriff bringbaren Nehmerkolben (18) über einen Nehmerdruckraum (20) hydraulisch beaufschlagt, wobei der Nehmerdruckraum (20) in der Ruhestellung des Geberkolbens (22) über einen Verbindungsabschnitt (28) im Gehäuse (46) mit dem Geberdruckraum (24) verbunden ist und der Geberkolben (22) in seiner Betätigungsstellung diese Verbindung unterbricht, **dadurch gekennzeichnet, daß** das Gehäuse (46) einen Versorgungsabschnitt (29) aufweist, von dem sowohl der Anschluß (26) zum Geberdruckraum (24) als auch der Verbindungsabschnitt (28) zum Nehmerdruckraum (20) abzweigt, wobei der hydraulische Querschnitt (d) des Verbindungsabschnitts (28) zum Nehmerdruckraum (20) kleiner ist als der hydraulische Querschnitt (D) des Anschlusses (26) zum Geberdruckraum (24).

2. Hydraulische Stellvorrichtung (10) nach Anspruch 1, **dadurch gekennzeichnet, daß** der Geberkolben (22) und der Nehmerkolben (18) in einer stufenlosen Zylinderbohrung (48) eines gemeinsamen Gehäuses (46) hintereinander angeordnet sind, wobei zwischen dem Geberkolben (22) und dem Nehmerkolben (18) vorzugsweise eine Druckfeder (66) angeordnet ist, die Geber- und Nehmerkolben (18, 22) gegeneinander verspannt.

3. Hydraulische Stellvorrichtung (10) nach Anspruch 2, **dadurch gekennzeichnet, daß** im Gehäuse (46) parallel zur Zylinderbohrung (48) ein Sackloch, vorzugsweise eine gestufte Sackbohrung (92), eingebracht ist, die den Versorgungsabschnitt (29) ausbildet.

4. Hydraulische Stellvorrichtung (10) nach einem der vorhergehenden Ansprüche, **dadurch gekennzeichnet, daß** der Geberkolben (22) in seiner Ruhestellung auf einem Anschlag gehalten ist, der beispielsweise durch einen Gehäuseboden (50) ausgebildet ist, während die Betätigungsstellung des Geberkolbens (22) vorzugsweise durch einen Anschlag begrenzt ist, der beispielsweise durch ein in der Zylinderbohrung (48) angebrachtes Sicherungselement (88) ausgebildet ist.

5. Hydraulische Stellvorrichtung (10) nach Anspruch 1, **dadurch gekennzeichnet, daß** der Nehmerkolben (18) ein Ringkolben und der Nehmerdruckraum (20) eine Ringkammer eines Zentralausrückers (126) ist, und der Geberkolben (22) eine Zylinderbohrung (48), die vorzugsweise im Gehäuse (46) des Zentralausrückers (126) ausgebildet ist, in den Geberdruckraum (24) und einen Arbeitsdruckraum (128) unterteilt, von denen letzterer stets mit dem Nehmerdruckraum (20) und in der Ruhestellung des Geberkolbens (22) über den Verbindungsabschnitt (28) mit dem Geberdruckraum (24) hydraulisch verbunden ist.

6. Hydraulische Stellvorrichtung (10) nach einem der vorhergehenden Ansprüche, **gekennzeichnet durch** eine Wegmeßeinrichtung, die ein am Nehmerkolben (18) angebrachtes Signalelement (104) und einen bezüglich des Gehäuses (46) ortsfesten Wegsensor (106) aufweist.

7. Hydraulische Stellvorrichtung (10) nach Anspruch 6, **dadurch gekennzeichnet, daß** das Gehäuse (46) mit einem zur Zylinderbohrung (48) parallelen Sackloch (110) versehen ist, in dem der Wegsensor (106) aufgenommen ist.

8. Hydraulische Stellvorrichtung (10) nach einem der vorhergehenden Ansprüche, **dadurch gekennzeichnet, daß** das Gehäuse (46) im Bereich des Nehmerdruckraums (20) einen Spülanschluß (112) aufweist.

9. Hydraulische Stellvorrichtung (10) nach einem der vorhergehenden Ansprüche, **dadurch gekennzeichnet, daß** das Verhältnis des hydraulischen Querschnitts (D) des Anschlusses (26) des Geberdruckraums (24) zum hydraulischen Querschnitt (d) des Verbindungsabschnitts (28) zum Nehmerdruckraum (20) größer gleich 30 ist.

## Claims

1. Hydraulic actuating device (10) for operating a clutch (16), in particular for motor vehicles, comprising a master piston (22) which within a housing (46) hydraulically delimits a master pressure chamber (24) by means of a sealing element (62), which master pressure chamber can be acted upon hydraulically via a connection (26) in order to move the master piston (22) from a rest position into an operating position in which the master piston (22) hydraulically acts upon a slave piston (18) via a slave pressure chamber (20), which slave piston can be brought into active engagement with the clutch (16), wherein the slave pressure chamber (20) is connected to the master pressure chamber (24) in the rest position of the master piston (22) via a connecting section (28) in the housing (46), and the master piston (22) interrupts this connection in its operating position, **characterized in that** the housing (46) has a supply section (29) from which both the connection (26) to the master pressure chamber (24) and the connecting section (28) to the slave pressure chamber (20) branch off, wherein the hydraulic cross section (d) of the connecting section (28) to the slave pressure chamber (20) is smaller than the hydraulic cross section (D) of the connection (26) to the master pressure chamber (24).

2. Hydraulic actuating device (10) according to Claim 1, **characterized in that** the master piston (22) and the slave piston (18) are arranged one behind the other in a step-free cylinder bore (48) of a common housing (46), wherein preferably a compression spring (66) is arranged between the master piston (22) and the slave piston (18), which compression spring braces the master piston and slave piston (18, 22) against one another.

3. Hydraulic actuating device (10) according to Claim 2, **characterized in that** a blind hole, preferably a stepped blind hole (92), is formed in the housing (46) parallel to the cylinder bore (48), which blind hole forms the supply section (29).

4. Hydraulic actuating device (10) according to any of the preceding claims, **characterized in that** the master piston (22), in its rest position, is held against a stop which is formed for example by a housing bottom (50), whereas the operating position of the master piston (22) is preferably delimited by a stop which is formed for example by a securing element (88) fitted in the cylinder bore (48) .

5. Hydraulic actuating device (10) according to Claim 1, **characterized in that** the slave piston (18) is an annular piston and the slave pressure chamber (20) is an annular chamber of a central clutch release device (126), and the master piston (22) divides a cylinder bore (48), which is preferably formed in the housing (46) of the central clutch release device (126), into the master pressure chamber (24) and an operating pressure chamber (128), of which the latter is always hydraulically connected to the slave pressure chamber (20) and in the rest position of the master piston (22) is hydraulically connected to the master pressure chamber (24) via the connecting section (28).

6. Hydraulic actuating device (10) according to any of the preceding claims, **characterized by** a travel measuring device which comprises a signal element (104) fitted on the slave piston (18) and a travel sensor (106) which is in a fixed position with respect to the housing (46).

7. Hydraulic actuating device (10) according to Claim 6, **characterized in that** the housing (46) is provided with a blind hole (110) which is parallel to the cylinder bore (48) and in which the travel sensor (106) is accommodated.

8. Hydraulic actuating device (10) according to any of the preceding claims, **characterized in that** the housing (46) has a flushing connection (112) in the region of the slave pressure chamber (20).

9. Hydraulic actuating device (10) according to any of the preceding claims, **characterized in that** the ratio of the hydraulic cross section (D) of the connection (26) of the master pressure chamber (24) to the hydraulic cross section (d) of the connecting section (28) to the slave pressure chamber (20) is greater than or equal to 30.

## Revendications

1. Dispositif d'actionnement hydraulique (10) pour actionner un embrayage (16), notamment pour véhicules automobiles, comprenant un piston maître ou piston pilote (22) qui délimite hydrauliquement dans un carter (46), au moyen d'un élément d'étanchéité (62), une chambre de pression pilote (24) pouvant être alimentée hydrauliquement par l'intermédiaire d'un raccord (26), en vue de déplacer le piston pilote (22) de sa position de repos dans une position d'actionnement dans laquelle le piston pilote (22) sollicite hydrauliquement, par l'intermédiaire d'une chambre de pression de récepteur (20), un piston récepteur (18) pouvant être amené en prise active avec l'embrayage (16), la chambre de pression de récepteur (20) étant reliée, pour la position de repos du piston pilote (22), à la chambre de pression pilote (24) par l'intermédiaire d'un tronçon de liaison (28) dans le carter (46), et le piston pilote (22) interrompant cette liaison dans sa position d'actionnement,
**caractérisé en ce que** le carter (46) présente un tronçon d'alimentation (29) duquel est dérivé aussi bien le raccord (26) vers la chambre de pression pilote (24), que le tronçon de liaison (28) vers la chambre de pression de récepteur (20), la section hydraulique (d) du tronçon de liaison (28) vers la chambre de pression de récepteur (20) étant inférieure à la section hydraulique (D) du raccord (26) vers la chambre de pression pilote (24).

2. Dispositif d'actionnement hydraulique (10) selon la revendication 1, **caractérisé en ce que** le piston pilote (22) et le piston récepteur (18) sont disposés l'un derrière l'autre dans un alésage cylindrique (48) continu, sans étagement, d'un carter commun (46), un ressort de compression (66) étant de préférence disposé entre le piston pilote (22) et le piston récepteur (18), et produisant une mise en tension réciproque des pistons pilote et récepteur (18, 22).

3. Dispositif d'actionnement hydraulique (10) selon la revendication 2, **caractérisé en ce que** dans le carter (46) est réalisé, parallèlement à l'alésage cylindrique (48), un trou borgne, de préférence un trou borgne étagé (92) qui forme le tronçon d'alimentation (29).

4. Dispositif d'actionnement hydraulique (10) selon l'une des revendications précédentes, **caractérisé en ce que** le piston pilote (22), dans sa position de repos, est maintenu sur une butée par exemple formée par un fond de carter (50), tandis que la position d'actionnement du piston pilote (22) est de préférence limitée par une butée par exemple formée par un élément d'arrêt (88) placé dans l'alésage cylindrique (48).

5. Dispositif d'actionnement hydraulique (10) selon la revendication 1, **caractérisé en ce que** le piston récepteur (18) est un piston annulaire et la chambre de pression de récepteur (20) une chambre annulaire d'un dispositif de débrayage central (126), et le piston pilote (22) subdivise un alésage cylindrique (48), qui de préférence est formé dans le carter (46) du dispositif de débrayage central (126), en la chambre de pression pilote (24) et une chambre de pression de travail (128) dont la dernière est toujours reliée hydrauliquement à la chambre de pression de récepteur (20), et, dans la position de repos du piston pilote (22), à la chambre de pression pilote (24) par l'intermédiaire du tronçon de liaison (28).

6. Dispositif d'actionnement hydraulique (10) selon l'une des revendications précédentes, **caractérisé par** un dispositif de mesure de déplacement, qui comprend un élément de signal (104) placé sur le piston récepteur (18) et un capteur de déplacement (106) fixe en position relativement au carter (46).

7. Dispositif d'actionnement hydraulique (10) selon la revendication 6, **caractérisé en ce que** le carter (46) est pourvu d'un trou borgne (110) qui est parallèle à l'alésage cylindrique (48), et dans lequel est logé le capteur de déplacement (106).

8. Dispositif d'actionnement hydraulique (10) selon l'une des revendications précédentes, **caractérisé en ce que** le carter (46) comporte un raccord de rinçage et de purge (112) dans la zone de la chambre de pression de récepteur (20).

9. Dispositif d'actionnement hydraulique (10) selon l'une des revendications précédentes, **caractérisé en ce que** le rapport de la section hydraulique (D) du raccord (26) de la chambre de pression pilote (24) sur la section hydraulique (d) du tronçon de liaison (28) vers la chambre de pression de récepteur (20), est supérieur ou égal à 30.
